# FASCICULE DE BREVET EUROPEEN

(11) **EP 2 443 819 B1**
(45) Date de publication et mention de la délivrance du brevet: **17.06.2020**
(21) Numéro de dépôt: 10724523.5
(22) Date de dépôt: 18.06.2010
(51) Int. Cl.: H04N 5/00, H04N 7/16

(54) **PROCEDE DE CONTROLE D'UN DECODEUR ET DECODEUR METTANT EN OEUVRE UN TEL PROCEDE**
VERFAHREN ZUR STEUERUNG EINES DECODERS UND DECODER ZUR ANWENDUNG DIESES VERFAHRENS
METHOD FOR CONTROLLING A DECODER AND DECODER FOR IMPLEMENTING SAID METHOD

(30) Priorité: 18.06.2009 FR 0954100
(43) Date de publication de la demande: 25.04.2012
(73) Titulaire: SAGEMCOM BROADBAND SAS, 92500 Rueil-Malmaison (FR)
(72) Inventeur: MEYGRET, Sylvain, F-92500 Rueil-Malmaison (FR); LANDAIS, Thomas, F-92500 Rueil-Malmaison (FR); LAGAISE, François, F-92500 Rueil-Malmaison (FR)
(74) Mandataire: Camus, Olivier Jean-Claude
(86) Numéro de dépôt international: PCT/EP2010/058654
(87) Numéro de publication internationale: WO 2010/146165

(56) Documents cités:
- WO-A1-03/025726
- WO-A1-2009/053401
- US-A1- 2005 033 846
- US-A1- 2006 035 610
- US-B1- 6 920 641

## Description

### Domaine technique de l'invention

La présente invention concerne un procédé de contrôle d'un décodeur ainsi qu'un décodeur mettant en œuvre ce procédé, notamment un décodeur du type STB - pour « Set Top Box » en anglais - relié à un terminal d'affichage.

### Arrière-plan technologique de l'invention

On connaît des décodeurs recevant des contenus multimédia à partir de différentes sources, par exemple à partir d'un réseau de diffusion numérique terrestre, à partir du réseau internet, à partir d'un disque dur, voire même à partir d'un réseau satellite, ces sources étant dénommées par la suite respectivement réseau TNT, réseau IP, HDD ou réseau SAT.

Parallèlement à la diversité des sources, ces contenus multimédia peuvent être transmis, via une même source ou via différentes sources, selon différentes qualités.

Par exemple, il est connu de permettre à un décodeur d'accéder à un contenu multimédia via le réseau IP soit en haute qualité HD - pour « High Définition » en anglais - soit en qualité standard SD - pour « Standard Définition » en anglais. Par la suite, un contenu multimédia transmis par une source donnée avec une qualité donnée est dénommé un programme.
Le document US 2006/035610 intitulé « Systems for unifying heterogeneous multimedia tuners » et le document US 2005/033846 intitulé « Resource manager architecture » sont connus de l'état de la technique.

### Description générale de l'invention

Compte tenu de la grande diversité des programmes auxquels peut avoir accès un décodeur, il apparaît que son fonctionnement peut être compromis lorsqu'un utilisateur requiert simultanément le traitement d'une pluralité de programmes, cette situation étant dénommée par la suite situation multitâche.

Typiquement, cette situation multitâche apparaît lorsqu'un décodeur souhaite traiter simultanément un premier programme et un deuxième programme en vue d'obtenir leur(s) affichage et/ou leur(s) enregistrement.

Dans ce cas, les ressources disponibles du décodeur peuvent être inférieures aux ressources requises pour effectuer ces affichage(s) et/ou ces enregistrement(s).

Dès lors le décodeur ne peut pas fonctionner de façon satisfaisante de telle sorte qu'au moins un traitement est compromis, ce qui diminue la qualité perçue par l'utilisateur d'un décodeur.
La présente invention vise à remédier ce problème en proposant un procédé de contrôle d'un décodeur évitant l'exécution d'une commande pouvant compromettre le fonctionnement satisfaisant d'un décodeur en mode multitâche. C'est pourquoi, l'invention concerne un procédé de contrôle d'un décodeur multimédia pouvant accéder simultanément à différents programmes de sources et/ou de qualités distinctes, le décodeur pouvant fonctionner selon un mode multitâche tel qu'il contrôle l'affichage et/ou l'enregistrement d'un premier programme simultanément à l'affichage et/ou l'enregistrement d'un second programme, caractérisé en ce que le décodeur communique avec un portail pour requérir la transmission d'un programme et effectue les étapes suivantes:
- l'étape d'identifier les ressources disponibles pour afficher et/ou enregistrer des programmes accessibles au décodeur,
- l'étape de déterminer les ressources requises pour afficher et/ou enregistrer chacun de ces programmes accessibles au décodeur, et
- l'étape, en mode multitâche, d'inhiber une commande d'affichage et/ou d'enregistrement d'un de ces programmes lorsque les ressources requises par le programme commandé sont supérieures aux ressources disponibles du décodeur, le décodeur inhibant ladite commande en bloquant ladite communication avec le portail et/ou en bloquant le traitement du programme transmis par le portail.

Grâce à l'invention, le fonctionnement satisfaisant d'un décodeur en mode multitâche est assuré puisqu'une commande pouvant compromettre ce fonctionnement est inhibé avant son exécution.

Ainsi, le procédé permet notamment de requérir auprès d'un utilisateur du décodeur la désactivation d'un affichage et/ou d'un enregistrement en cours pour libérer les ressources nécessaires à la commande transmise.

En d'autres termes, le procédé permet de maintenir le décodeur dans un fonctionnement tel que ses ressources peuvent répondre aux demandes de son utilisateur et, ainsi, fonctionner de façon satisfaisante pour ce dernier.

Le procédé selon l'invention peut également présenter une ou plusieurs des caractéristiques ci-dessous, considérées individuellement ou selon toutes les combinaisons techniquement possibles.

Dans une réalisation, le décodeur détermine les ressources requises pour afficher et/ou enregistrer chaque programme accessible en fonction de la source et/ou de la qualité de ce programme accessible.

Selon une réalisation, la source de chaque programme accessible est une des sources suivantes: un réseau numérique terrestre, un réseau utilisant le protocole IP pour « Internet Protocol » en anglais, un réseau satellite, un disque dur, un démultiplexeur, un réseau câblé en fibre optique.

Dans une réalisation, la qualité de chaque programme accessible est déterminée par une bande passante et/ou par un format du type HD pour « High Définition » en anglais.

Selon une réalisation, le décodeur identifie ses ressources disponibles et les ressources requises par chaque programme accessible sous la forme d'une quantité de mémoire requise.

Dans une réalisation, le décodeur génère un message vis-à-vis d'un utilisateur du décodeur pour afficher au moins un des éléments suivants : une information de l'inhibition de la commande, une requête d'une nouvelle commande.

Selon une réalisation, le décodeur affiche et/ou enregistre un programme dont le contenu multimédia correspond au contenu du programme commandé avec une source et/ou une qualité distincte(s).

Selon une réalisation, le portail commandant l'affichage d'un programme transmis, le décodeur simule cet affichage vis-à-vis du portail pendant l'affichage du message d'information.

L'invention concerne également un décodeur multimédia pouvant accéder simultanément à différents programmes de sources et/ou de qualités distinctes, ce décodeur pouvant fonctionner selon un mode multitâche tel qu'il contrôle simultanément l'affichage d'un premier programme et l'enregistrement d'un second programme, caractérisé en ce qu'il communique avec un portail pour requérir la transmission d'un programme et comprend des moyens pour mettre en œuvre un procédé conforme à l'une des revendications précédentes, ces moyens comprenant:
- Des moyens pour identifier les ressources disponibles pour afficher et/ou enregistrer des programmes accessibles au décodeur,
- Des moyens pour déterminer les ressources requises pour afficher et/ou enregistrer chacun de ces programmes, et
- Des moyens pour inhiber, en mode multitâche, une commande d'affichage et/ou d'enregistrement d'un de ces programmes lorsque les ressources requises par le programme commandé sont supérieures aux ressources disponibles du décodeur, comportant des moyens pour bloquer la communication avec le portail et/ou des moyens pour bloquer le traitement du programme transmis par le portail.

### Brève description des figures

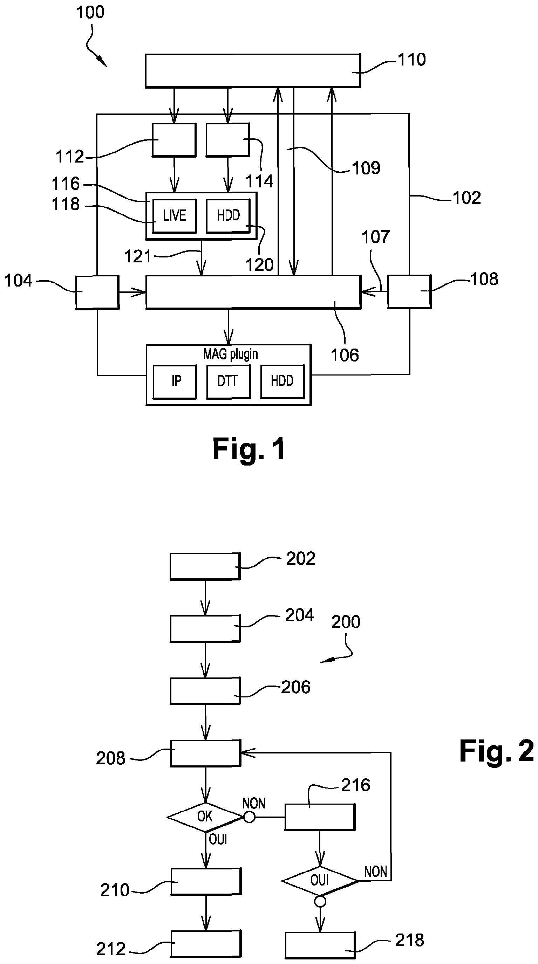

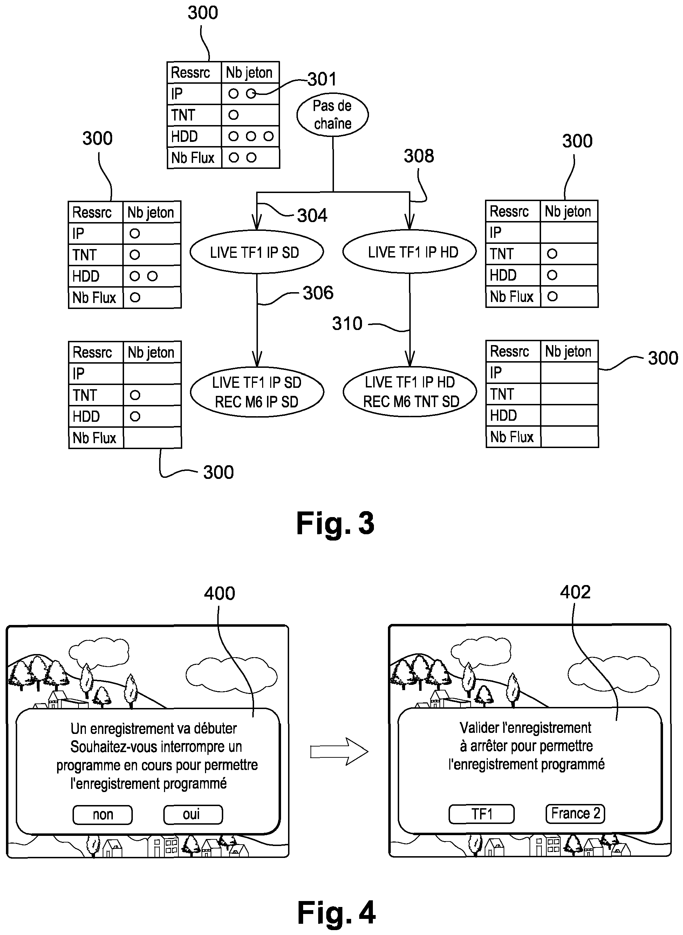

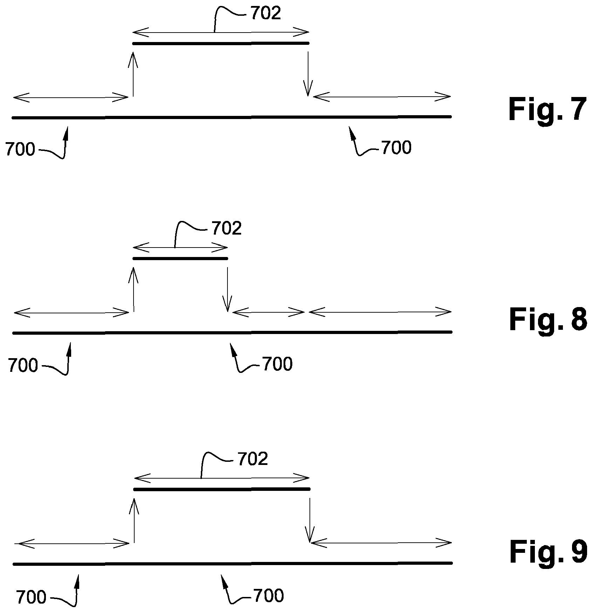

D'autres caractéristiques et avantages de l'invention ressortiront clairement de la description qui en est donnée ci-dessous, à titre indicatif et nullement limitatif, en référence aux figures ci-jointes sur lesquelles :
- A la figure 1, est représenté schématiquement un système muni d'un décodeur conforme à l'invention,
- A la figure 2 sont illustrées schématiquement différentes étapes mises en œuvre par un procédé conforme à l'invention,
- A la figure 3 est représentée schématiquement la gestion des ressources d'un décodeur conforme à l'invention,
- Aux figures 4, 5 et 6 sont représentés des captures d'écran de messages générés par un décodeur conforme à l'invention, et
- Aux figures 7, 8 et 9 sont représentés des diagrammes d'une étape facultative dans la mise en œuvre de l'invention.

### Description des formes de réalisation préférées de l'invention

En référence à la figure 1 est représenté de façon fonctionnel un système 100 conforme à l'invention, c'est-à-dire muni d'un décodeur 102 pouvant accéder simultanément à différents programmes 104 de sources et/ou de qualités distinctes et fonctionner selon un mode multitâche tel qu'il contrôle simultanément l'affichage et/ou l'enregistrement d'un premier programme et d'un second programme.

Conformément à l'invention, le décodeur 102 comprend des moyens 106 de contrôle pour:
- identifier les ressources disponibles pour afficher et/ou enregistrer des programmes 104 accessibles au décodeur 102,
- déterminer les ressources requises pour afficher et/ou enregistrer chacun de ces programmes 104, et
- inhiber, en mode multitâche, une commande 108 d'affichage et/ou d'enregistrement d'un de ces programmes lorsque les ressources requises par le programme commandé sont supérieures aux ressources disponibles du décodeur.

Conformément à l'invention, le décodeur maintient des communications avec un portail 110 transmettant des programmes sur commande du décodeur 102, par exemple via le réseau IP. Dans ce cas, le décodeur comprend des modules 112 et 114 logiciels qui coopèrent avec le navigateur 116 du décodeur pour des transmissions en direct ou « Live » - étape 118 - ou en différé après enregistrement sur un disque dur 120.

Les moyens 106 de contrôle du décodeur peuvent alors effectuer un double contrôle de la capacité de décodeur à maintenir un fonctionnement satisfaisant, à savoir :
- lors de la réception 107 de la commande par le décodeur, ou
- lors de la réception 121 des contenus transmis par le portail 110, ce second contrôle permettant notamment d'inhiber la commande 108 si les ressources du décodeur ont diminué après la transmission d'une requête 109 pour l'émission d'un programme.

Si ces contrôles sont satisfaisants, le décodeur 102 exécute la commande requise en mode multitâche, typiquement double flux, en permettant l'affichage et/ou l'enregistrement conforme à la commande 108 au moyen de logiciels « IP », « DTT » ou « HDD » dédiés à chaque source.

Si l'un de ces contrôles n'est pas satisfaisant, le décodeur 102 génère un message vis-à-vis d'un utilisateur du décodeur pour informer cet utilisateur de l'inhibition de la commande et/ou requérir une nouvelle commande.

Par exemple, si la commande 108 requiert l'enregistrement d'un programme HD dont le contenu est accessible via un autre programme SD, le décodeur 102 peut informer/requérir de l'exécution de la commande 108 à partir de ce programme SD afin de limiter les ressources requises.

Dans ce cas, le décodeur 102 affiche et/ou enregistre un programme dont le contenu multimédia est identique au contenu du programme commandé mais dont la source est distincte.

En référence à la figure 2 est représenté un algorithme 200 représentant différentes étapes pouvant être mises en œuvre par un procédé conforme à l'invention, à savoir :
- Une étape 202 telle qu'un utilisateur émet la commande pour l'affichage et/ou l'enregistrement d'un programme,
- Une étape 204 tel que le décodeur identifie le programme commandé,
- Une étape 206 tel que le décodeur initialise la demande de ses ressources,
- Une étape 208 tel que le décodeur compare ses ressources disponibles avec les ressources requises par la commande de telle sorte que :
   Soit les ressources requises sont disponibles auquel cas le décodeur transmet (210) la commande au portail et exécute (212) la commande,
   Soit les ressources requises ne sont pas disponibles auquel cas le décodeur peut effectuer une recherche (216) d'une solution alternative pour proposer à l'utilisateur une commande de substitution, typiquement l'affichage et/ou l'enregistrement 218 d'un programme de qualité moindre que le programme commandé mais de même contenu.

Une illustration de cette mise en œuvre est effectuée sur la figure 3 qui représente l'évolution des ressources disponibles dans un tableau 300 qui évolue selon le fonctionnement d'un décodeur auquel il est associé - par exemple le décodeur 102 de la figure 1.

Dans cet exemple, on identifie les ressources disponibles du décodeur et les ressources requises par les programmes sous la forme d'une quantité de mémoire requise représentée par des jetons 301.

Préalablement à toute commande, on détermine les ressources requises par chaque programme accessible au décodeur en convenant que :
- Pour le réseau IP, un programme HD requiert deux jetons de ressources tandis qu'un programme SD ne requiert qu'un unique jeton de ressources.

De façon pratique, la qualité d'un programme transmis via le réseau IP peut être déterminée par une indication du fournisseur du contenu, par exemple un champ client dans le codage des données tel qu'une extension « HD.subscription » des fichiers, ou par une détection automatique utilisant des tests qui, par exemple, mesurent des pertes de paquets et/ou des rapports signal à bruit (PSNR).
- Pour le réseau TNT, le nombre de chaînes reçues, ou tuner, mis en œuvre détermine le nombre de jetons disponibles pour cette source.
- Pour le démultiplexeur, le nombre de flux pouvant être pris en compte par le décodeur détermine le nombre de jetons. Le démultiplexeur pouvant apporter une limitation à un nombre de flux maximal reçu par le décodeur.
- Pour le réseau SAT, le nombre de tuner détermine le nombre de jetons disponibles pour cette ressource.
- Une limitation est liée au nombre de flux pouvant être traitée par décodeur.

Il convient de noter que les ressources du décodeur utilisant le tableau sont identifiées en fonction des sources accessibles avant tout traitement d'une chaîne, dans cet exemple pour le réseau IP (2 jetons) et pour le réseau TNT (1 jeton), ainsi que pour le disque dur HDD (3 jetons).

De même, le nombre de flux pouvant être pris en compte par le décodeur est déterminé préalablement à tout fonctionnement, dans ce cas limité à un fonctionnement bi-flux (2 jetons).

Suite à une demande 304 d'affichage, ou « Live », d'un programme « TF1 » issu du réseau IP en qualité SD, le tableau 300 des ressources est modifié pour prendre en compte l'attribution de ressources du réseau IP à cet affichage.

Plus précisément, les ressources du réseau IP sont alors limitées à 1 jeton, le second jeton étant utilisé pour l'affichage du programme TF1.

De façon parallèle, les ressources multiflux sont diminuées d'un jeton puisqu'un flux est pris en compte de même que les ressources du disque dur (HDD) qui traite provisoirement le flux affiché.

Lors d'une seconde commande 306 destinée à enregistrer « Rec » un programme « M6 » en qualité standard SD via le réseau IP, le décodeur passe en mode multitâche et met en œuvre l'invention pour vérifier la disponibilité des ressources.

Cet enregistrement est permis puisque, dans ce cas, les ressources requises - à savoir un jeton du réseau IP, un jeton du disque dur HDD et un jeton pour le nombre de flux - sont disponibles comme illustré dans le tableau 300 à l'issu de l'étape précédente.

Tel n'est pas le cas lorsque le même décodeur reçoit une commande 308 pour afficher « live » le programme « TF1 » en haute qualité HD. Dans ce cas, les ressources requises au niveau du réseau IP correspondent à l'ensemble des ressources disponibles du décodeur - deux jetons.

Dès lors, une deuxième commande 310 pour enregistrer « Rec » le programme « M6 » en qualité standard SD via le réseau IP ne peut être pris en compte de façon satisfaisante. Aussi le décodeur passe en mode multitâche en mettant en œuvre l'invention de façon à inhiber cette commande et, par exemple, obtenir le contenu « M6 » commandé par l'utilisateur par une autre source dont les ressources sont disponibles, à savoir le réseau TNT dans cet exemple.

En référence à la figure 4, un premier exemple de message 400 contrôlé par le décodeur est illustré dans une situation multitâche - ou multiflux - telle qu'un premier programme « TF1 » et un second programme « France 2 » sont en cours d'enregistrement, ce second programme étant également en cours d'affichage.

Suite au déclenchement d'une commande programmée d'enregistrement, le décodeur détecte une insuffisance des ressources disponibles vis-à-vis des ressources requises par ce troisième enregistrement - ce décodeur ne pouvant pas gérer trois flux simultanément.

C'est pourquoi, un message 400 est affiché - après avoir inhibé la commande d'enregistrement du troisième programme - pour requérir une nouvelle commande de l'utilisateur, à savoir l'arrêt d'un des enregistrements en cours que l'utilisateur peut identifier dans un second message 402.

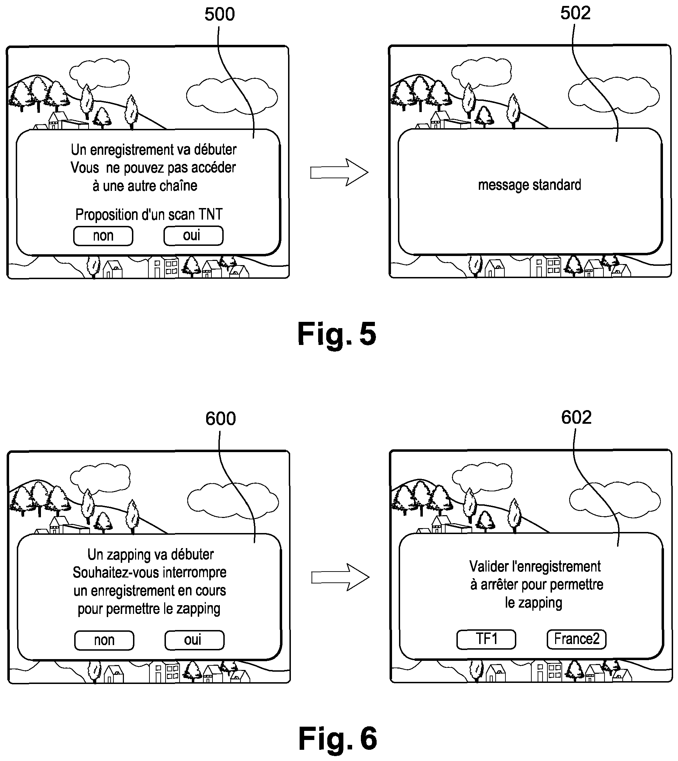

En référence à la figure 5, un second exemple de message 500 est illustré dans une situation multitâche telle que, un premier programme étant en cours d'enregistrement, une commande d'enregistrement d'un second programme est inhibé puisque les ressources disponibles du décodeur sont insuffisantes pour enregistrer le contenu à haute qualité HD de ce programme programmé.

C'est pourquoi, le message 500 propose à l'utilisateur de rechercher le contenu requis à partir d'une source distincte - en l'espèce le réseau TNT - requérant des ressources disponibles du décodeur, un message standard 502 pouvant confirmer le choix de l'utilisateur.

En référence à la figure 6, un troisième exemple est illustré dans une situation multitâche - ou multiflux - telle qu'un premier programme « TF1 » et un second programme « France 2 » sont en cours d'enregistrement, ce second programme étant également en cours d'affichage.

Suite au déclenchement d'une commandé programmée d'affichage d'un troisième programme, le décodeur détecte une insuffisance des ressources disponibles vis-à-vis des ressources requises par ce troisième enregistrement - ce décodeur ne pouvant pas gérer trois flux simultanément.

C'est pourquoi, un message 600 est affiché - après avoir inhibé la commande d'affichage du troisième programme - pour requérir une nouvelle commande de l'utilisateur, à savoir l'arrêt d'un des enregistrements en cours que l'utilisateur peut identifier dans un second message 602.

La présente invention est susceptible de nombreuses variantes. En référence aux figures 7, 8 et 9 est illustrée une variante visant à permettre le maintien d'un message affiché par le décodeur en cas d'inhibition d'une commande.

De fait, un décodeur peut être associé à un portail comme précédemment décrit en référence à la figure 1. Dans ce cas, le portail comprend des moyens pour commander l'affichage d'un programme transmis ou, le cas échéant, pour arrêter la transmission de ce programme.

Comme montré sur la figure 7, des demandes 700 sont ainsi transmises par le portail au décodeur tandis que, éventuellement, le message 702 du décodeur peut être affiché entre deux telles demandes.

Toutefois, il est possible qu'une demande 700 d'affichage émise par le portail soit émise alors même que le message du décodeur est en cours (figure 8), ce qui perturbe sa lecture et/ou sa compréhension par un utilisateur du décodeur.

Dans ce cas, il est souhaitable que le décodeur comprenne des moyens, par exemple logiciels, pour éviter que la demande 700 du portail soit prise en compte (figure 9). Par exemple, le décodeur peut simuler l'affichage du programme transmis par le portail vis-à-vis de ce dernier tant que le message du décodeur est en cours d'affichage.

Dans une réalisation, le décodeur met en œuvre des plans de services qui identifient, pour chaque réseau, des programmes en fonction de leur contenu multimédia.

Ainsi, le décodeur peut utiliser le plan de services de différents réseaux pour identifier un accès possible à un même contenu puis, dans un mode multitâche, proposer/imposer l'obtention d'un contenu selon un programme distinct du programme commandé.

Dans une réalisation, le décodeur enregistre une machine-état qui répertorie l'ensemble des modes de fonctionnement multitâches requérant des ressources inférieures à ses ressources disponibles.

Il est également possible de prendre en compte d'éventuels abonnements à un ou plusieurs programmes, voire à des réseaux comme le câble en fibre optique, comme paramètre définissant un programme.

## Revendications

1. Procédé de contrôle d'un décodeur multimédia (102) pouvant accéder simultanément à différents programmes (104) de sources et/ou de qualités distinctes, le décodeur (102) pouvant fonctionner selon un mode multitâche tel qu'il contrôle l'affichage et/ou l'enregistrement d'un premier programme simultanément à l'affichage et/ou l'enregistrement d'un second programme, **caractérisé en ce que** le décodeur (102) communique avec un portail (110) pour requérir la transmission d'un programme et effectue les étapes suivantes :
- l'étape (206) d'identifier les ressources disponibles (301) pour afficher et/ou enregistrer des programmes (104) accessibles au décodeur (102),
- l'étape de déterminer les ressources requises pour afficher et/ou enregistrer chacun de ces programmes (104) accessibles au décodeur (102), le décodeur identifiant ses ressources disponibles et les ressources requises par chaque programme accessible (104) sous la forme d'une quantité de mémoire requise, et
- l'étape, en mode multitâche, d'inhiber une commande d'affichage et/ou d'enregistrement d'un de ces programmes lorsque les ressources requises par le programme commandé sont supérieures aux ressources disponibles (301) du décodeur, le décodeur (102) inhibant ladite commande en bloquant ladite communication avec le portail (110) et/ou en bloquant le traitement du programme transmis par le portail (110).

2. Procédé selon la revendication 1 **caractérisé en ce que** le décodeur détermine les ressources requises pour afficher et/ou enregistrer chaque programme accessible (104) en fonction de la source et/ou de la qualité de ce programme accessible (104).

3. Procédé selon la revendication 2, **caractérisé en ce que** la source de chaque programme accessible (104) est une des sources suivantes : un réseau numérique terrestre, un réseau utilisant le protocole IP pour « Internet Protocol » en anglais, un réseau satellite, un disque dur, un démultiplexeur, un réseau câblé en fibre optique.

4. Procédé selon la revendication 3, **caractérisé en ce que** la qualité de chaque programme accessible (104) est déterminée par un format du type HD pour « High Définition » en anglais.

5. Procédé selon l'une des revendications précédentes, **caractérisé en ce que** le décodeur génère un message (400, 402, 500, 502, 600, 602) vis-à-vis d'un utilisateur du décodeur (102) pour afficher au moins un des éléments suivants : une information de l'inhibition de la commande, une requête d'une nouvelle commande.

6. Procédé selon l'une des revendications précédentes, **caractérisé en ce que** le décodeur (102) affiche et/ou enregistre un programme dont le contenu multimédia correspond au contenu du programme commandé avec une source et/ou une qualité distincte(s).

7. Procédé selon la revendication 5, **caractérisé en ce que** le portail (110) commandant l'affichage d'un programme transmis, le décodeur (102) simule cet affichage vis-à-vis du portail (110) pendant l'affichage du message d'information.

8. Décodeur multimédia (102) pouvant accéder simultanément à différents programmes (104) de sources et/ou de qualités distinctes, ce décodeur (102) pouvant fonctionner selon un mode multitâche tel qu'il contrôle simultanément l'affichage d'un premier programme et l'enregistrement d'un second programme, **caractérisé en ce qu'**il communique avec un portail (110)pour requérir la transmission d'un programme et comprend des moyens pour mettre en œuvre un procédé conforme à l'une des revendications précédentes, ces moyens comprenant :
- Des moyens pour identifier les ressources disponibles (301) pour afficher et/ou enregistrer des programmes accessibles au décodeur (102),
- Des moyens pour déterminer les ressources requises pour afficher et/ou enregistrer chacun de ces programmes, et
Des moyens pour inhiber, en mode multitâche, une commande d'affichage et/ou d'enregistrement d'un de ces programmes lorsque les ressources requises par le programme commandé sont supérieures aux ressources disponibles (301) du décodeur, comportant des moyens pour bloquer ladite communication avec le portail (110) et/ou des moyens pour bloquer le traitement du programme transmis par le portail (110).

## Patentansprüche

1. Kontrollverfahren eines Multimedien-Dekodierers (102), der gleichzeitig auf unterschiedliche Quell- und / oder Programme (104) verschiedener Qualitäten zugreifen kann, wobei dieser Dekodierer (102) gemäß einem Multimedien-Modus derart funktionieren kann, dass er gleichzeitig das Anzeigen eines ersten Programms und das Abspeichern eines zweiten Programms kontrolliert, **dadurch gekennzeichnet, dass** der Dekodierer (102) mit einem Portal (110) zum Anfordern der Übertragung eines Programms kommuniziert und die folgenden Schritte durchführt:
- den Identifizierungsschritt (206) der zum Anzeigen und / oder Abspeichern der im Dekodierer (102) zugänglichen Programme (104) verfügbaren Ressourcen (301);
- den Bestimmungsschritt der Ressourcen, die zum Anzeigen und / oder Abspeichern jeder dieser im Dekodierer (102) zugänglichen Programme (104) erforderlichen Ressourcen, wobei der Dekodierer seine verfügbaren Ressourcen und die Ressourcen, die von jedem zugänglichen Programm (104) angefordert werden, in Form einer erforderlichen Speichermenge identifiziert, und
- den Schritt zum Verhindern eines Anzeige- und / oder Abspeicherbefehls eines dieser Programme im Multitasking-Modus, wenn die von dem gesteuerten Programm erforderlichen Ressourcen die verfügbaren Ressourcen (301) des Dekodierers übersteigen, wobei der Dekodierer (102) den genannten Befehl verhindert, indem die genannte Kommunikation mit dem Portal (110) blockiert wird und / oder die Verarbeitung des von dem Portal (110) übertragenen Programms blockiert wird.

2. Verfahren gemäß Anspruch 1, **dadurch gekennzeichnet, dass** der Dekodierer die Ressourcen bestimmt, die zum Anzeigen und / oder Abspeichern jedes zugänglichen Programms (104) erforderlich sind, das in Abhängigkeit von der Quelle und / oder der Qualität dieses zugänglichen Programms (104) erforderlich sind.

3. Verfahren gemäß Anspruch 2, **dadurch gekennzeichnet, dass** die Quelle jedes zugänglichen Programms (104) eine der folgenden Quellen ist: ein digitales terrestrisches Netz, ein Netz, dass das Protokoll IP für "Internet-Protocol" im Englischen nutzt, ein Satelliten-Netz, eine Festplatte, einen Demultiplexer, ein mit Glasfasern verkabeltes Netz.

4. Verfahren gemäß Anspruch 3, **dadurch gekennzeichnet, dass** die Qualität jedes zugänglichen Programms (104) durch ein Format des Typs HD für "High Definition" im Englischen, bestimmt ist.

5. Verfahren gemäß einem der voranstehenden Ansprüche, **dadurch gekennzeichnet, dass** der Dekodierer eine Nachricht (400, 402, 500, 502, 600, 602) gegenüber einem Nutzer des Dekodierers (102) erzeugt, um wenigstens eines der folgenden Elemente anzuzeigen: eine Information zum Verhindern des Befehls, eine Anfrage nach einem neuen Befehl.

6. Verfahren gemäß einem der voranstehenden Ansprüche, **dadurch gekennzeichnet, dass** der Dekodierer (102) ein Programm anzeigt und / oder abspeichert, dessen Multimedien-Inhalt dem Inhalt des Programms überträgt, das mit einer verschiedenen Quelle und / oder einer verschiedenen Qualität gesteuert wird.

7. Verfahren gemäß Anspruch 5, **dadurch gekennzeichnet, dass**, wenn das Portal (110) die Anzeige eines übertragenen Programms befiehlt, der Dekodierer (12) diese Anzeige gegenüber dem Portal (110) während der Anzeige der Informationsnachricht simuliert.

8. Multimedien-Dekodierer (102), der gleichzeitig auf unterschiedliche Quell- und / oder Programme (104) verschiedener Qualitäten zugreifen kann, wobei dieser Dekodierer (102) gemäß einem Multimedien-Modus derart funktionieren kann, dass er gleichzeitig das Anzeigen eines ersten Programms und das Abspeichern eines zweiten Programms kontrolliert, **dadurch gekennzeichnet, dass** er mit einem Portal (110) kommuniziert, um die Übertragung eines Programms anzufordern, und Mittel zum Umsetzen eines Programms gemäß einem der voranstehenden Ansprüche umfasst, wobei diese Mittel umfassen:
- Mittel zum Identifizieren der verfügbaren Ressourcen (301) zum Anzeigen und / oder Abspeichern der im Dekodierer (102) zugänglichen Programme,
- Mittel zum Bestimmen der erforderlichen Ressourcen zum Anzeigen und / oder Abspeichern jedes dieser Programme, und
Mittel zum Verhindern eines Anzeige- und / oder Abspeicherbefehls eines dieser Programme im Multitasking-Modus, wenn die von dem gesteuerten Programm angeforderten Ressourcen die verfügbaren Ressourcen (301) des Dekodierers übersteigen, umfassend Mittel zum Blockieren der genannten Kommunikation mit dem Portal (110) und / oder Mittel zum Blockieren der Verarbeitung des von dem Portal (110) übertragenen Programms.

## Claims

1. Method for controlling a multimedia decoder (102) that can simultaneously access different programs (104) from different sources and/or of different qualities, wherein the decoder (102) can operate in a multitask mode such that it controls the display and/or recording of a first program simultaneously with the display and/or recording of a second program, **characterised in that** the decoder (102) communicates with a portal (110) in order to request the transmission of a program and performs the following steps:
- the step (206) of identifying the resources available (301) for displaying and/or recording programs (104) accessible by the decoder (102),
- the step of determining the resources required for displaying and/or recording each of the programs (104) accessible by the decoder (102), the decoder identifying its available resources and the resources required by each program accessible (104) in the form of a quantity of memory required, and
- the step, in multitask mode, of inhibiting a displaying and/or recording control of one of these programs when the resources required by the requested program are higher than the available resources (301) of the decoder, the decoder (102) inhibiting said control by blocking said communication with the portal (110) and/or by blocking the processing of the program transmitted by the portal (110).

2. Method according to claim 1 **characterised in that** the decoder determines the resources required for displaying and/or recording each accessible program (104) according to the source and/or the quality of this accessible program (104).

3. Method according to claim 2, **characterised in that** the source of each program accessible (104) is one of the following sources: a digital terrestrial network, a network using the IP protocol (Internet Protocol), a satellite network, a hard drive, a demultiplexer, a fibre optic cable network.

4. Method according to claim 3, **characterised in that** the quality of each accessible program (104) is determined by a format of the HD ("High Definition") type.

5. Method according to one of the preceding claims, **characterised in that** the decoder generates a message (400, 402, 500, 502, 600, 602) to a user of the decoder (102) in order to display at least one of the following elements: information of the inhibiting of the control, a request for a new control.

6. Method according to one of the preceding claims, **characterised in that** the decoder (102) displays and/or records a program of which the multimedia content corresponds to the content of the requested program with a different source and/or different quality.

7. Method according to claim 5, **characterised in that** the portal (110) controlling the display of a transmitted program, the decoder (102) simulates this display with regards to the portal (110) during the display of the information message.

8. Multimedia decoder (102) that can simultaneously access different programs (104) from different sources and/or of different qualities, this decoder (102) being able to operate in a multitask mode such that it simultaneously controls the displaying of a first program and the recording of a second program, **characterised in that** it communicates with a portal (110) in order to request the transmission of a program and comprises means for implementing a method in accordance with one of the preceding claims, with these means comprising:
- Means for identifying the resources available (301) for displaying and/or recording programs accessible by the decoder (102),
- Means for determining the resources required for displaying and/or recording each one of these programs, and
Means for inhibiting, in multitask mode, a displaying and/or recording control of one of these programs when the resources required by the requested program are higher than the available resources (301) of the decoder, comprising means for blocking said communication with the portal (110) and/or means for blocking the processing of the program transmitted by the portal (110).
